# DEMANDE DE BREVET EUROPEEN

(11) **EP 4 467 381 A1**
(43) Date de publication de la demande: **27.11.2024**
(21) Numéro de dépôt: 24177894.3
(22) Date de dépôt: 24.05.2024
(51) Int. Cl.: B60L 8/00, B60L 50/60, B60L 58/20, G06F 30/20, G06F 119/06

(54) **PROCÉDÉ DE CONCEPTION D'UN VÉHICULE ÉLECTRIQUE À MOYENS DE CHARGE MULTISOURCES**

(30) Priorité: 26.05.2023 FR 2305291
(71) Demandeur: Commissariat à l'Energie Atomique et aux Energies Alternatives, 75015 Paris (FR)
(72) Inventeur: KAROUI HENCHIRI, Fathia, 38054 GRENOBLE cedex 09 (FR); CHAMBION, Bertrand, 38054 GRENOBLE Cedex 09 (FR); KLEIN, Jean-Marie, 38054 GRENOBLE cedex 09 (FR)
(74) Mandataire: INNOV-GROUP

(57) **Abrégé**

Procédé de conception d'un véhicule électrique à moyens de charge multisources dont un moyen de charge principal et un moyen de charge solaire, comportant les étapes suivantes :
- déterminer un modèle numérique du véhicule, produisant en sortie la distance autogénérée par énergie solaire sur un intervalle de temps d'utilisation indépendamment de la distance générée par le moyen de charge principal ;
- appliquer le modèle numérique pour deux valeurs de référence et obtenir les deux valeurs correspondantes de distance autogénérée par énergie solaire ;
- déterminer deux points de calibrage ;
- déterminer une fonction représentative de la distance autogénérée par énergie solaire en fonction de la puissance crête du module photovoltaïque;
- déterminer une puissance crête résultante pour le module photovoltaïque, correspondant à une valeur choisie de distance autogénérée par énergie solaire ;
- dimensionner le véhicule (1) et le module photovoltaïque (7) en fonction de ladite puissance crête résultante.

## Description

### DOMAINE TECHNIQUE

L'invention concerne le domaine de la conception des véhicules automobiles qui intègrent une motorisation électrique, des accumulateurs électriques alimentant cette motorisation électrique, et des moyens de charge multisources des accumulateurs électriques. Ces véhicules avec moyens de charge multisources sont des véhicules qui disposent d'au moins deux sources d'énergie permettant leur recharge, dont l'une est l'énergie solaire. Il s'agit de véhicules qui comportent un moyen de charge principal, tel que le réseau électrique ou un générateur électrique, et qui comportent un moyen de charge solaire complémentaire, tel que des modules photovoltaïques.

Les véhicules électriques, qu'ils soient propulsés exclusivement par une motorisation électrique, ou que cette motorisation électrique vienne en complément d'autres motorisations, peuvent comporter des modules photovoltaïques tels que des panneaux solaires contribuant à la charge des batteries du véhicule en agissant comme moyen de charge complémentaire, en plus d'un moyen de charge principal.

Un module photovoltaïque comme moyen de charge complémentaire, tel qu'un toit solaire sur un véhicule, permet à ce dernier d'obtenir un supplément d'autonomie électrique. Pour un véhicule exclusivement électrique, cela se traduit par une augmentation de l'autonomie et une diminution de la fréquence de charge par le moyen de charge principal. Pour un véhicule hybride, cela se traduit par un recours moindre au moteur thermique et donc une consommation moindre de carburant.

Les moyens de charge par énergie solaire, comme moyens de charge complémentaires, sont amenés à se développer sur les véhicules, et la conception des véhicules nécessite d'être repensée pour intégrer les nouvelles contraintes correspondantes afin de combiner de manière optimale la charge principale et la charge complémentaire relative à l'énergie solaire.

### ART ANTÉRIEUR

La problématique de l'intégration physique de moyens de charge solaires comme moyen de charge complémentaire sur des véhicules automobiles disposant d'au moins un autre moyen de charge principal, bien que récente, est connue. Lors de la conception d'un véhicule automobile, il est nécessaire de choisir et dimensionner aussi bien le module photovoltaïque à intégrer au véhicule, que les parties du véhicule qui vont être impactées par l'intégration du module photovoltaïque.

Dans l'art antérieur, les procédés de conception de véhicules électriques qui intègrent un module photovoltaïque comme moyen de charge complémentaire se bornent à prévoir un module photovoltaïque dont la surface correspond à la plus grande surface disponible sur une portion du véhicule qui est exposée au rayonnement solaire. Cette approche guidée par l'utilisation de la surface maximale disponible présente l'inconvénient de n'être pas optimisée du point de vue du coût et peut conduire dans certains cas à des véhicules dont l'augmentation de coût ne sera pas compensée de manière optimale par l'énergie apportée par le module photovoltaïque.

De plus, du point de vue énergétique, les procédés de conception de l'art antérieur n'optimisent pas le véhicule en fonction de son bilan carbone total. En effet, la fabrication du module photovoltaïque intégré au véhicule présente un bilan carbone qu'il est nécessaire d'ajouter au bilan carbone du reste du véhicule. Les procédés de dimensionnement de l'art antérieur peuvent conduire à des véhicules électriques dans lesquels l'énergie apportée par le module photovoltaïque durant la durée de vie du véhicule ne compense pas le bilan carbone lié à l'intégration de ce module photovoltaïque.

Par ailleurs, dans les véhicules électriques et hybrides, au moins deux batteries de technologie différentes coexistent et doivent être gérées. Cette gestion consiste souvent à utiliser une batterie au plomb, dite de service, pour le démarrage de l'éventuel moteur thermique et le fonctionnement des équipements auxiliaires, et à utiliser une batterie de tension élevée, de type lithium-ion, pour la réserve d'énergie alimentant les moyens de traction électriques, assurant l'autonomie du véhicule.

De plus, dans le contexte où, par exemple, un toit solaire est ajouté au véhicule, une problématique supplémentaire s'ajoute pour la charge avec ce toit solaire. Cette problématique est liée au fait que, compte tenu du caractère multisource des moyens de charge, ce même véhicule peut se trouver dans des conditions de charge aux contraintes divergentes, qu'il devra rendre compatibles. Par exemple le véhicule peut se trouver dans une configuration de charge principale où la quantité d'énergie liée à la mise sous tension (appelée « réveil ») des calculateurs des moyens de charge n'a pas d'incidence sur la charge (lorsque par exemple le véhicule est arrêté et en charge sur le réseau électrique, par exemple sur une borne électrique). Dans d'autres conditions, le véhicule peut se trouver dans une configuration de charge complémentaire où la quantité d'énergie liée au réveil des calculateurs permettant d'injecter l'énergie d'origine solaire dans la batterie de traction du véhicule, impactent fortement la charge secondaire.

Il est ainsi nécessaire d'optimiser la quantité d'énergie liée à la mise sous tension (appelée « réveil ») des calculateurs dans le cadre des véhicules à sources de charge multiples. Il est notamment nécessaire de minimiser la quantité d'énergie relative au réveil des calculateurs pour maximiser l'usage de l'énergie photovoltaïque et donc le supplément d'autonomie généré par le toit solaire, et ainsi maximiser l'impact écologique positif de l'utilisation du solaire.

### EXPOSÉ DE L'INVENTION

L'invention a pour but d'améliorer les procédés de conception de véhicules de l'art antérieur, pour ce qui est de l'intégration d'un module photovoltaïque.

À cet effet, l'invention vise un procédé de conception d'un véhicule électrique à moyens de charge multisources dont un moyen de charge principal et un moyen de charge solaire complémentaire, ce véhicule comportant :
- un accumulateur électrique de traction qui est associé à un système de gestion de batterie et qui alimente une motorisation électrique du véhicule ;
- un accumulateur électrique de service qui alimente un réseau électrique de service du véhicule ;
- un moyen de charge principal ;
- un moyen de charge complémentaire comportant un module photovoltaïque adapté à charger l'accumulateur électrique de traction et l'accumulateur électrique de service par l'intermédiaire d'une architecture électronique de charge solaire.

Ce procédé comporte les étapes suivantes :
- déterminer un modèle numérique du véhicule, produisant en sortie la distance autogénérée par énergie solaire sur un intervalle de temps d'utilisation indépendamment de la distance générée par le moyen de charge principal, pour des paramètres en entrée qui comprennent une puissance crête du module photovoltaïque, une série temporelle d'irradiance sur l'intervalle de temps d'utilisation, une consommation kilométrique de la motorisation électrique du véhicule sur l'intervalle de temps d'utilisation, une consommation électrique de ladite architecture électronique de charge sur l'intervalle de temps d'utilisation, ce modèle numérique du véhicule intégrant une stratégie de charge desdits accumulateurs électriques qui remplit les conditions suivantes : si la puissance fournie par le module photovoltaïque est supérieure à une valeur seuil prédéterminée, l'accumulateur électrique de traction est directement chargé par le module photovoltaïque ; et si la puissance fournie par le module photovoltaïque est inférieure à une valeur seuil prédéterminée, le module photovoltaïque charge uniquement l'accumulateur électrique de service, et l'accumulateur électrique de traction est périodiquement chargé par déversement itératif de l'accumulateur électrique de service ;
- appliquer ledit modèle numérique pour deux valeurs de référence correspondant à deux puissances crête de module photovoltaïque différentes, tous les autres paramètres d'entrée du modèle numérique étant égaux, et obtenir les deux valeurs correspondantes de distance autogénérée par énergie solaire ;
- déterminer deux points de calibrage, chaque point de calibrage associant l'une desdites valeurs de référence et sa distance autogénérée par énergie solaire correspondante ;
- déterminer une fonction représentative de la distance autogénérée par énergie solaire en fonction de la puissance crête du module photovoltaïque, passant sensiblement par les deux points de calibrage ;
- déterminer une fonction inverse de ladite fonction, cette fonction inverse étant représentative de la puissance crête du module photovoltaïque en fonction de la distance autogénérée par énergie solaire ;
- déterminer, avec ladite fonction inverse, une puissance crête résultante pour le module photovoltaïque, cette puissance crête résultante correspondant à une valeur choisie de distance autogénérée par énergie solaire ;
- dimensionner le véhicule et le module photovoltaïque en fonction de ladite puissance crête résultante.

L'invention est un procédé de conception qui s'applique à tout véhicule électrique à moyens de charge multisources, c'est-à-dire à tout véhicule qui peut être propulsé par une énergie électrique durant tout ou partie de ses phases de roulage, et qui comporte un moyen de charge principal, tel qu'en chargeur relié au réseau électrique, ou un générateur électrique entrainé par un moteur (cas des véhicules hybrides ou embarquant un groupe électrogène). Ces véhicules comportent une motorisation électrique alimentée par un accumulateur électrique de traction (généralement un pack de batteries lithium-ion). Les véhicules à propulsion exclusivement électrique sont concernés, ainsi que les véhicules où cette motorisation vient en complément, de manière permanente ou intermittente, d'une autre motorisation tel qu'un moteur thermique (cas des véhicules hybrides).

L'accumulateur électrique de service désigne ici un accumulateur permettant d'alimenter les équipements du bord du véhicule, et éventuellement un dispositif de démarrage de moteur thermique dans le cas des véhicules hybrides. L'accumulateur de service est généralement une batterie au plomb de 12 V ou 24 V. L'invention est donc spécifique aux véhicules comportant une motorisation électrique, qui ont des moyens de charge multisources dont au moins un moyen solaire, et qui comportent à la fois des batteries de traction haute tension et des batteries de service basse tension. Ces caractéristiques représentent, du point de vue de l'art antérieur, une somme de contraintes, mais l'invention tire partie des synergies entre ces caractéristiques pour optimiser les moyens de charge et le véhicule lui-même.

L'expression « déversement itératif » désigne ici le fait que l'accumulateur de service est tout d'abord chargé par le module photovoltaïque jusqu'à un état de charge correspondant à un seuil haut, voire un état de charge de 100 %. Ensuite, l'accumulateur de service est utilisé pour charger l'accumulateur de traction, jusqu'à ce que l'état de charge de l'accumulateur de service descende jusqu'à une valeur prédéterminée (par exemple 50 %). La charge de l'accumulateur de traction est alors stoppée, et la charge de l'accumulateur de service par le module photovoltaïque est reprise. L'énergie de l'accumulateur de service est ainsi déversée dans l'accumulateur de traction, de manière itérative.

L'invention permet de concevoir un véhicule électrique à moyens de charge multisources (en ce qui concerne l'intégration d'un module photovoltaïque) de telle sorte que le module photovoltaïque soit choisi, dimensionné, et intégré au sein du véhicule dont certaines surfaces sont également dimensionnées, avec une garantie d'optimisation de l'apport du module photovoltaïque à la consommation électrique du véhicule, compte tenu du comportement des moyens de charge solaire et notamment de l'interaction entre le moyen de charge principal et le moyen de charge solaire complémentaire. Cette optimisation est obtenue aussi bien en coût, qu'énergétiquement (notamment en bilan carbone positif).

L'invention prend en compte les paramètres essentiels de l'apport d'un module photovoltaïque dans le cadre d'une stratégie de charge optimisée qui a pour contrainte la gestion de moyens de charge hétérogènes du fait qu'ils sont multisources. Le procédé de conception permettant d'obtenir un dimensionnement du véhicule optimal (incluant le dimensionnement physique de portions du véhicule, le choix d'un agencement pour le module photovoltaïque, un choix de technologies des moyens électroniques et du module photovoltaïque, et un dimensionnement des surfaces).

Le procédé selon l'invention peut comporter les caractéristiques additionnelles suivantes, seules ou en combinaison :
- l'étape d'appliquer ledit modèle numérique pour deux valeurs de référence comporte une opération supplémentaire d'appliquer ledit modèle numérique pour une troisième valeur de référence correspondant à une troisième puissance crête de module photovoltaïque différente, tous les autres paramètres d'entrée du modèle numérique étant égaux, et obtenir une troisième valeur correspondante de distance autogénérée par énergie solaire ;
- l'étape de déterminer deux points de calibrage comporte une opération supplémentaire de déterminer un troisième point de calibrage associant la troisième valeur de référence et sa distance autogénérée par énergie solaire correspondante ;
- l'étape de déterminer une fonction représentative de la distance autogénérée par énergie solaire en fonction de la puissance crête du module photovoltaïque, est réalisée en déterminant une fonction passant sensiblement par les trois points de calibrage ;
- ladite fonction représentative de la distance autogénérée par énergie solaire en fonction de la puissance crête du module photovoltaïque, est déterminée comme : une fonction linéaire passant sensiblement par les trois points de calibrage, si les trois points de calibrage sont sensiblement alignés ; une fonction non linéaire passant sensiblement par les trois points de calibrage, si les trois points de calibrage sont non alignés ;
- ladite fonction représentative de la distance autogénérée par énergie solaire en fonction de la puissance crête du module photovoltaïque, est déterminée comme une fonction linéaire suivant une régression linéaire sur les trois points de calibrage ;
- au moins deux de ses étapes sont réalisées en itération pour différentes valeurs de la série temporelle d'irradiance sur l'intervalle de temps d'utilisation ;
- au moins deux étapes sont réalisées en itération pour différentes valeurs de ladite consommation kilométrique de la motorisation électrique du véhicule ;
- au moins deux étapes sont réalisées en itération pour différentes valeurs de consommation électrique de ladite architecture électronique de charge sur l'intervalle de temps d'utilisation ;
- ladite valeur choisie de distance autogénérée par énergie solaire est égale à une première unité d'une valeur de distance ;
- ladite valeur choisie de distance autogénérée par énergie solaire correspond à une distance minimale prédéterminée pour le véhicule sur l'intervalle de temps d'utilisation ;
- l'étape de dimensionner le véhicule et le module photovoltaïque comporte le choix d'une technologie de module photovoltaïque présentant un rendement, et la détermination de la surface du module photovoltaïque correspondant à la puissance crête résultante, compte-tenu de ce rendement ;
- l'étape de dimensionner le véhicule et le module photovoltaïque comporte : pour au moins deux technologies de module photovoltaïque différentes, la détermination de la surface de module photovoltaïque correspondant à la puissance crête résultante, compte-tenu du rendement de chaque technologie de module photovoltaïque ; et comporte de plus la sélection d'une de ces technologies de module photovoltaïque en fonction de ces surfaces déterminées ;
- l'étape de dimensionner le véhicule et le module photovoltaïque comporte le dimensionnement des éléments porteurs du module photovoltaïque sur le véhicule ;
- l'étape de dimensionner le véhicule et le module photovoltaïque comporte le choix d'un module photovoltaïque distribué en sous-modules photovoltaïques associés à différentes surfaces porteuses du véhicule ;
- l'accumulateur électrique de traction est une batterie de tension supérieure à 100 V;
- l'accumulateur de service est une batterie au plomb ;
- ladite série temporelle d'irradiance comporte des valeurs d'irradiance par pas de temps, sur l'intervalle de temps d'utilisation, d'une localisation réelle présentant un ensoleillement moyen pour un territoire déterminé ;
- ladite série temporelle d'irradiance comporte des valeurs d'irradiance par pas de temps, sur l'intervalle de temps d'utilisation, chaque pas de temps correspondant à des moyennes d'irradiance sur un territoire déterminé ;
- ladite série temporelle d'irradiance comporte des valeurs d'irradiance par pas de temps, sur l'intervalle de temps d'utilisation, pour un lieu réel déterminé ;
- ladite valeur seuil prédéterminée est sensiblement égale au coefficient C5 de l'accumulateur électrique de service ;
- à l'étape de déterminer un modèle numérique du véhicule, les paramètres en entrée du modèle numérique comportent des pertes par ombrage du module photovoltaïque sur l'intervalle de temps d'utilisation ;
- au moins deux de ses étapes sont réalisées en itération pour différentes valeurs de pertes par ombrage du module photovoltaïque sur l'intervalle de temps d'utilisation.

### PRÉSENTATION DES FIGURES

D'autres caractéristiques et avantages de l'invention ressortiront de la description non limitative qui suit, en référence aux dessins annexés dans lesquels :
- la figure 1 illustre schématiquement un véhicule électrique adapté à une conception par un procédé selon l'invention ;
- la figure 2 illustre schématiquement le modèle numérique du véhicule utilisé dans le procédé selon l'invention ;
- la figure 3 est un exemple de l'application de la stratégie de charge intégrée au modèle numérique utilisé dans le procédé de conception, pour un véhicule en stationnement ;
- la figure 4 est un diagramme illustrant les étapes du procédé de conception selon l'invention ;
- la figure 5 est un graphique illustrant l'une des étapes du procédé de conception.

Les éléments similaires et communs aux divers modes de réalisation portent les mêmes numéros de renvoi aux figures.

### DESCRIPTION DÉTAILLÉE

Le procédé de conception d'un véhicule électrique à moyens de charge multisources selon l'invention peut être mis en oeuvre par exemple pour la conception d'un nouveau modèle de véhicule de série, pour une reconception appliquée à un véhicule particulier, ou pour la production sur mesure d'un véhicule spécial, adapté par exemple à une localité particulière. Le procédé de conception permet de déterminer les caractéristiques d'un module photovoltaïque à intégrer au véhicule, ainsi que les caractéristiques des structures d'implantation du véhicule pour ce module photovoltaïque, dans le cadre d'une stratégie de charge multisources.

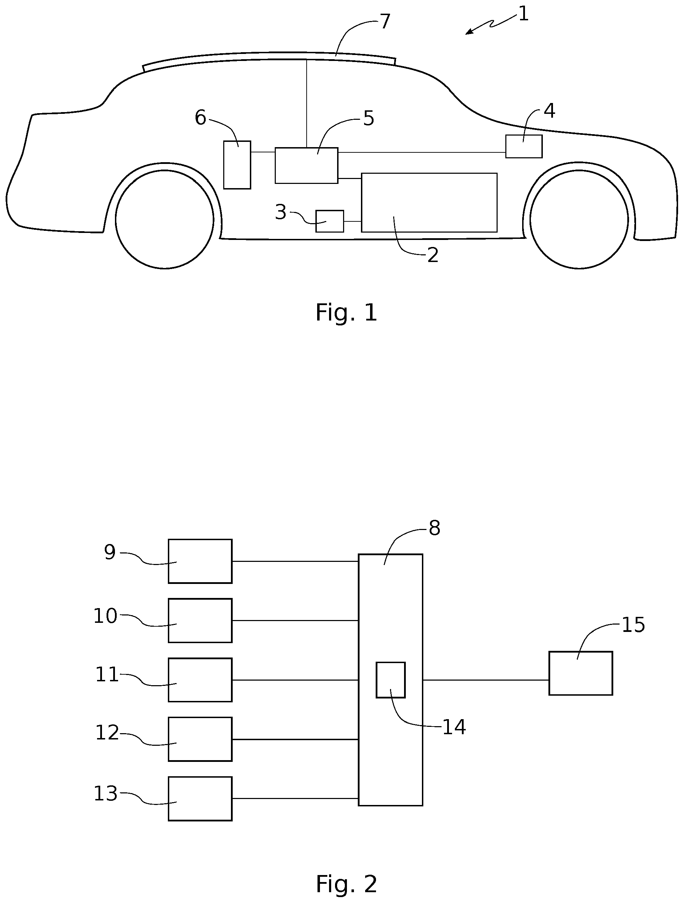

La figure 1 illustre schématiquement un véhicule électrique 1 auquel peut être appliqué le procédé de conception selon l'invention. Le véhicule 1 est propulsé, à titre principal ou en complément d'une autre motorisation, par une motorisation électrique (non illustrée) comportant, de manière connue, un ou plusieurs moteurs électriques et leur électronique de commande.

La motorisation électrique du véhicule 1 est alimentée par un accumulateur électrique de traction 2. L'expression « accumulateur électrique » est une expression générique désignant tout moyen connu permettant de stocker de l'énergie électrique lors de phases de charge et de la restituer par la suite sous forme d'énergie électrique. L'accumulateur électrique de traction 2 peut être par exemple un pack de batterie lithium-ion, ou toutes autres technologies de stockage d'énergie électrique. Il s'agit en pratique d'une batterie de tension élevée, généralement supérieure à 100 V, et généralement de l'ordre de 400 V.

L'accumulateur électrique de traction 2 est dans cet exemple associé à un système de gestion de batterie 3 (BMS pour « Battery Management System ») connu, nécessaire pour le contrôle et la surveillance de l'accumulateur électrique de traction 2 dans ses phases de charge et de décharge. Le véhicule comportant des moyens de charge multisources, le système de gestion de batterie 3 est ici sollicité de manière sélective en fonction de la source de charge et des conditions présentes, comme exposé plus loin.

La motorisation électrique du véhicule 1 et l'accumulateur électrique de traction 2 participent à la fonction de traction du véhicule, c'est-à-dire à la fonction permettant le déplacement du véhicule.

Le véhicule électrique 1 comporte de plus un accumulateur électrique de service 4 destiné à alimenter un réseau électrique de service du véhicule 1. En effet, en plus de l'alimentation de sa motorisation électrique, le véhicule 1 dispose nécessairement d'un réseau électrique de service alimentant les différents équipements du bord tels qu'essuie-glaces, ventilations, éclairages, etc., ainsi que démarreur électrique (pour les véhicules hybrides avec moteur thermique), et tout autre équipement ou accessoire du véhicule. Les réseaux électriques de service des véhicules sont en général des réseaux 12 V ou 24 V. Dans le présent exemple, l'accumulateur électrique de service 4 est une batterie au plomb de tension 12 V. Le réseau électrique de service du véhicule est, dans le cadre de l'invention, mis à profit pour participer dans certaines conditions aux opérations de charge des batteries de traction, et de la gestion des moyens de charge multisources, en synergie avec un moyen de charge secondaire solaire.

Le véhicule 1 comporte de plus un module électronique de charge 5, connu de l'art antérieur, et permettant de charger les accumulateurs 2,4 à partir d'une source d'énergie. Dans le contexte de l'invention, le module électronique de charge 5 est nécessairement un module multisources, c'est-à-dire qu'il est adapté à charger les accumulateurs 2,4 depuis au moins une source principale (tel que le réseau électrique ou un générateur thermique) et au moins une source complémentaire qui est solaire.

L'expression « source d'énergie » est ici une expression générique désignant tout moyen connu pour charger des accumulateurs électriques, qu'ils soient de traction ou de service. Ces sources d'énergie incluent des sources principales non solaires 6 (schématisées sur la figure 1 par un rectangle 6 unique) tels que, par exemple, un réseau électrique sur lequel le véhicule 1 à l'arrêt peut être branché, un convertisseur continu-continu DC/DC, un alternateur entrainé par un éventuel moteur thermique du véhicule 1, un dispositif de récupération de l'énergie du freinage, ou tout autre moyen.

Ces sources d'énergie comportent de plus une source complémentaire de charge sous forme d'un module photovoltaïque 7, également raccordé au module électronique de charge 5 pour la charge des accumulateurs 2,4.

Le module de charge 5 est un dispositif électronique classique comportant des moyens de programmation. Il sera programmé selon des stratégies de charge connues pour les accumulateurs 2,4, et il sera de plus programmé avec les stratégies de charge solaires décrites plus loin, et permettant de gérer à la fois la présence de batteries hétérogènes (batteries de traction et de batteries de service) et la présence de multiples sources de charge aux contraintes différentes, de manière optimisée.

Le module photovoltaïque 7 est ici illustré sous forme d'un toit solaire. Ce module photovoltaïque peut cependant occuper toute autre surface disponible sur le véhicule et susceptible d'être exposée au rayonnement solaire. Ce module photovoltaïque peut de plus se présenter en un ou plusieurs tronçons répartis sur différentes surfaces du véhicule 1.

Le module de charge 5 est ainsi adapté à gérer la charge des accumulateurs 2,4, directement ou indirectement, à partir de l'énergie électrique fournie par les sources non solaires 6 (les sources principales) et par le module photovoltaïque 7 (la source complémentaire), selon une stratégie programmée.

Dans le cadre de la conception générale d'un véhicule électrique, l'invention concerne un procédé de conception des aspects visant la charge des accumulateurs 2,4 par un module photovoltaïque en intégrant son fonctionnement dans le cadre d'une gestion de charge multisources, et à batteries hétérogènes.

Le procédé selon l'invention comporte les étapes générales suivantes :
- déterminer un modèle numérique du véhicule 1 ;
- déterminer des points de calibrage définissant une fonction représentative d'une distance autogénérée par énergie solaire en fonction de la puissance crête du module photovoltaïque ;
- choisir une valeur de distance autogénérée par énergie solaire et déterminer la puissance crête du module photovoltaïque 7 correspondante ;
- dimensionner le véhicule 1 et le module photovoltaïque.

Plusieurs de ces étapes peuvent être réalisées de manière itérative pour aboutir à une conception finalisée optimale.

La première étape consiste à déterminer un modèle numérique du véhicule adapté à produire en sortie de modèle une valeur de distance autogénérée par énergie solaire, en réponse à un certain nombre de paramètres donnés en entrée.

La figure 2 présente schématiquement le modèle numérique 8 en question, avec ses paramètres d'entrée et sa production en sortie.

Ce modèle numérique 8 du véhicule 1 est, de manière classique, un ensemble de fonctions et de corrélations relatives au fonctionnement du véhicule et programmées, par exemple, dans des outils numériques à disposition d'un bureau d'études mettant en oeuvre le procédé de conception selon l'invention. Ce modèle numérique est adapté à fournir un résultat en sortie (ici, une distance autogénérée par énergie solaire 15, cette distance étant représentative de la contribution du module photovoltaïque 7 à la propulsion du véhicule 1) en réponse à des paramètres d'entrée 9 à 13.

L'expression « distance autogénérée par énergie solaire » désigne, sur un intervalle de temps d'utilisation déterminé, la distance totale que le véhicule 1 peut parcourir avec la quantité d'énergie exploitable provenant uniquement du module photovoltaïque 7. Autrement dit, la distance autogénérée par énergie solaire, sur un intervalle de temps d'utilisation, traduit la contribution du module photovoltaïque 7, en apport d'énergie convertie en distance parcourue effective. Le calcul de la distance autogénérée par énergie solaire est spécifique à l'invention et à son cadre de mise en oeuvre : les véhicules à charge multisources, dont la distance totale parcourue (et donc l'énergie totale consommée) provient de manière combinée à la fois depuis un moyen de charge principal et depuis le moyen de charge solaire complémentaire, et ce selon les conditions de roulage, d'exposition au soleil, d'arrêt à une borne de recharge, etc.

Le modèle numérique 8 est une modélisation d'un véhicule qui inclut un accumulateur de service 4, un accumulateur de traction 2, un système de charge principal qui est dans le présent exemple un système de charge sur le réseau électrique (sur borne de recharge électrique, par exemple), et un système de charge solaire complémentaire.

Le modèle numérique 8 reçoit en entrée au moins les cinq paramètres suivants :
- la puissance crête 9 du module photovoltaïque ;
- une série temporelle d'irradiance 10 sur un intervalle de temps d'utilisation ;
- une valeur de pertes par ombrage 11 du module photovoltaïque 7, sur l'intervalle de temps d'utilisation (paramètre pouvant être intégré à la série temporelle d'irradiance 10) ;
- la consommation kilométrique 12 de la motorisation électrique du véhicule (dans le cadre de sa fonction de traction électrique), sur l'intervalle de temps d'utilisation, et par exemple compte tenu d'un profil d'utilisation du véhicule ;
- la consommation électrique 13 de l'architecture de charge solaire du véhicule électrique, sur l'intervalle de temps d'utilisation.

Le modèle numérique 2 peut de plus recevoir en entrée toute autre valeur supplémentaire utile, relative au dimensionnement des éléments du véhicule, par exemple : la capacité de l'accumulateur de traction 2 (par exemple 50 kWh), et de l'accumulateur de service 4, le rendement de l'accumulateur de traction 2, le rendement de l'accumulateur de service 4, le rendement des convertisseurs DC/DC, la consommation électrique pendant la veille du véhicule, etc. Le modèle numérique 2 peut également recevoir en entrée des valeurs relatives à l'usage du véhicule : profil de conduite, types de trajet, kilométrage estimé durant l'intervalle de temps d'utilisation, etc.

L'intervalle de temps d'utilisation est un temps sur lequel seront quantifiés les paramètres d'entrée. L'intervalle de temps d'utilisation est de préférence suffisamment long pour s'affranchir des fluctuations ponctuelles des paramètres. Par exemple, l'intervalle de temps d'utilisation est avantageusement d'une année, pour englober un cycle complet de saisons.

Les paramètres en entrée du modèle numérique 8 sont donnés sur ledit intervalle de temps d'utilisation (une année, dans cet exemple) et c'est sur ce même intervalle de temps d'utilisation que le modèle numérique 8 fournit en sortie la distance annuelle autogénérée par énergie solaire 15, de manière à séparer et quantifier l'énergie fournie par le moyen de charge solaire complémentaire par rapport à l'énergie fournie par le moyen de charge principal. Cette donnée de sortie correspond à la distance qui est parcourue par le véhicule à partir de la seule énergie fournie de manière effective par le module photovoltaïque 7, cette distance correspondant donc à l'énergie stockée dans l'accumulateur de traction 2 et qui est due uniquement à l'apport du module photovoltaïque 7, compte tenu de l'apport en énergie du système photovoltaïque et de la consommation du véhicule.

Le modèle numérique 8 peut être réalisé de manière simple par un modèle de véhicule avec panneaux solaires, à base de bilans énergétiques. Un tel modèle numérique 8 détermine ainsi, pour chaque pas de temps (des pas de 15 minutes dans cet exemple), un bilan entre l'énergie qui est produite à partir du solaire, et l'énergie qui est restituée sous forme d'énergie mécanique de déplacement du véhicule. L'énergie qui est produite par le solaire est réduite des différentes pertes et cette énergie est vue sous forme d'énergie consommée par le véhicule, pour faire rouler le véhicule et faire fonctionner les équipements de service, ces énergies transitant par les accumulateurs du véhicule.

Le modèle numérique 8 permet de simuler la production solaire nette du système (une fois toutes les pertes déduites) et la consommation du véhicule selon un profil de charge des accumulateurs du véhicule, sur l'intervalle de temps d'utilisation.

Cette approche par un modèle numérique est d'autant plus importante pour un véhicule à moyen de charge multisources que celui-ci peut être amené régulièrement à une charge complète de sa batterie de traction au travers de son moyen de charge principal, le moyen de charge complémentaire ne pouvant alors plus contribuer à la charge tant que la batterie de traction reste pleine. La possibilité de charge par le moyen de charge secondaire devient alors notablement diffus, seulement possible lorsque la batterie de traction n'est plus à pleine charge, ce qui rend important l'utilisation d'une modèle numérique de simulation par pas de temps permettant de quantifier précisément cette charge répartie dans le temps.

Les valeurs données en entrée du modèle sont explicitées chacune ci-après.

La puissance crête 9 du module photovoltaïque 7 est une valeur de référence, donnée en entrée du modèle numérique 8. Dans le cadre de l'invention, plusieurs puissances crête du module photovoltaïque seront données au modèle numérique 8 comme expliqué plus loin dans le but de déterminer précisément une puissance crête optimisée pour le module photovoltaïque 7. La puissance crête d'un module photovoltaïque pour véhicule peut être par exemple de l'ordre de 300 W

La série temporelle d'irradiance 10, sur l'intervalle de temps d'utilisation concerné, est une série de valeurs d'irradiance (c'est-à-dire d'éclairement énergétique donné en W/m²), chaque valeur d'irradiance correspondant à un pas de temps donné. Par exemple, une série temporelle d'irradiance peut être constituée par des valeurs d'irradiance par pas de 15 minutes. Sur un intervalle de temps d'utilisation d'une année, une telle série temporelle d'irradiance comportera une année découpée en mois, les mois en journées, et les journées découpées en pas de 15 minutes avec pour chacun une valeur d'irradiance.

Ces informations peuvent être obtenues à partir des données d'ensoleillement d'une localité donnée. Pour chaque mois de l'année nous pouvons disposer, pour cette localité donnée, de l'énergie moyenne et de l'évolution horaire de l'irradiation solaire pour une journée donnée.

Pour le cas d'une zone géographique étendue, ce qui est le cas par exemple lors de la conception d'un véhicule destiné à un continent particulier, un choix de localité est réalisé. Par exemple, le choix peut porter sur une localité de cette zone géographique qui correspond à la moyenne de l'ensoleillement de la zone, ou qui correspond au plus fort ensoleillement de la zone, ou qui correspond au plus bas ensoleillement de la zone. Dans le cas de l'application du procédé de conception pour une réalisation sur-mesure relative à une localité particulière, les données d'irradiance de cette localité seront directement utilisées comme paramètre de série temporelle d'irradiance 10.

Les valeurs d'irradiance de la localité sont donc données comme série temporelle d'irradiance 10 en entrée du modèle numérique 8. À titre d'exemple illustratif, le tableau ci-dessous donne des moyennes mensuelles de valeurs d'irradiance en W/m² pour une ville choisie comme localité, par pas d'une heure, sur un intervalle de temps d'utilisation d'une année.

| **H** | Jan | Fev | Mars | Avril | Mai | Juin | Juil | Aout | Sep | Oct | Nov | Dec |
|---|---|---|---|---|---|---|---|---|---|---|---|---|
| **0 - 1** | 0 | 0 | 0 | 0 | 0 | 0 | 0 | 0 | 0 | 0 | 0 | 0 |
| **1 - 2** | 0 | 0 | 0 | 0 | 0 | 0 | 0 | 0 | 0 | 0 | 0 | 0 |
| **2 - 3** | 0 | 0 | 0 | 0 | 0 | 0 | 0 | 0 | 0 | 0 | 0 | 0 |
| **3 - 4** | 0 | 0 | 0 | 0 | 0 | 0 | 0 | 0 | 0 | 0 | 0 | 0 |
| **4 - 5** | 0 | 0 | 0 | 0 | 16 | 64 | 23 | 0 | 0 | 0 | 0 | 0 |
| **5 - 6** | 0 | 0 | 0 | 47 | 153 | 179 | 148 | 83 | 7 | 0 | 0 | 0 |
| **6 - 7** | 0 | 0 | 56 | 202 | 252 | 254 | 234 | 225 | 162 | 24 | 0 | 0 |
| **7 - 8** | 0 | 51 | 187 | 294 | 318 | 320 | 309 | 304 | 284 | 176 | 43 | 0 |
| **8 - 9** | 97 | 198 | 265 | 347 | 351 | 357 | 351 | 352 | 336 | 239 | 166 | 99 |
| **9 - 10** | 168 | 233 | 294 | 364 | 360 | 374 | 370 | 373 | 353 | 262 | 197 | 168 |
| **10 - 11** | 203 | 260 | 317 | 373 | 362 | 374 | 375 | 375 | 352 | 288 | 223 | 203 |
| **11 - 12** | 217 | 278 | 345 | 382 | 364 | 379 | 371 | 383 | 356 | 306 | 230 | 219 |
| **12 - 13** | 215 | 276 | 352 | 371 | 343 | 373 | 357 | 377 | 352 | 281 | 216 | 212 |
| **13 - 14** | 196 | 241 | 311 | 341 | 321 | 349 | 335 | 344 | 325 | 251 | 190 | 180 |
| **14 - 15** | 162 | 212 | 281 | 304 | 297 | 329 | 324 | 319 | 301 | 226 | 161 | 137 |
| **15 - 16** | 76 | 177 | 247 | 270 | 267 | 296 | 304 | 300 | 271 | 183 | 53 | 34 |
| **16 - 17** | 0 | 34 | 188 | 237 | 234 | 262 | 264 | 261 | 211 | 27 | 0 | 0 |
| **17 - 18** | 0 | 0 | 28 | 141 | 187 | 217 | 216 | 188 | 39 | 0 | 0 | 0 |
| **18 - 19** | 0 | 0 | 0 | 7 | 75 | 141 | 138 | 31 | 0 | 0 | 0 | 0 |
| **19 - 20** | 0 | 0 | 0 | 0 | 0 | 16 | 13 | 0 | 0 | 0 | 0 | 0 |
| **20 - 21** | 0 | 0 | 0 | 0 | 0 | 0 | 0 | 0 | 0 | 0 | 0 | 0 |
| **21 - 22** | 0 | 0 | 0 | 0 | 0 | 0 | 0 | 0 | 0 | 0 | 0 | 0 |
| **22 - 23** | 0 | 0 | 0 | 0 | 0 | 0 | 0 | 0 | 0 | 0 | 0 | 0 |
| **23 - 24** | 0 | 0 | 0 | 0 | 0 | 0 | 0 | 0 | 0 | 0 | 0 | 0 |
| **Total** | 1334 | 1960 | 2871 | 3680 | 3900 | 4284 | 4132 | 3915 | 3349 | 2263 | 1479 | 1252 |

Le paramètre de pertes par ombrage 11 correspond quant à lui aux pertes dues à l'ombrage du module photovoltaïque 7 sur l'intervalle de temps d'utilisation concerné. Ces pertes peuvent être déterminées par une valeur moyenne tirée de mesures, d'estimations, etc. Ce paramètre de pertes par ombrage peut être donnée en entrée du modèle numérique 8 par exemple sous forme d'un coefficient (30 % dans cet exemple). Ce qui signifie que la puissance totale qui serait délivrée par le module photovoltaïque 7 dans les conditions d'exposition solaire du paramètre de série temporelle d'irradiance 10, sur l'intervalle de temps d'utilisation, seront réduites de ce coefficient de 30 % par le modèle numérique 8, pour prendre en compte les inévitables pertes résultant de l'ombrage intempestif, partiel ou total du module photovoltaïque 7 durant certaines phases de l'intervalle de temps d'utilisation, compte tenu d'une utilisation estimée.

Cependant, le paramètre de perte par ombrage 11 est optionnellement donné de manière directe en entrée du modèle. En effet, les pertes par ombrage peuvent également être intégrées dans les données de la série temporelle d'irradiance 10.

Optionnellement, les pertes de différents organes électroniques du système relatif au solaire peuvent être également donnés en entrée du modèle, pour les déduire également de cette énergie totale (par exemple, 12 % de pertes système peuvent être données en entrée supplémentaire du modèle numérique 8).

Le paramètre de consommation kilométrique 12 de la motorisation électrique du véhicule est donné en entrée du modèle numérique 8 pour un scénario d'utilisation sur l'intervalle de temps d'utilisation, avec des phases de roulage et des phases de veille du véhicule. Ces scénarios peuvent être obtenus par tous moyens classiques de moyennes d'utilisations, ou d'estimations.

Cette consommation kilométrique 12 s'étend sur l'intervalle de temps d'utilisation et inclus les phases de parking, dans lesquelles une consommation électrique en veille a lieu compte tenu des équipements électroniques en veille, notamment les composants permettant la charge solaire. La consommation kilométrique indique, pendant les phases de roulage, la consommation de la motorisation électrique en Wh/km et la consommation de l'électronique durant le roulage, et indique également la consommation de l'électronique seule durant les phases de parking.

Un profil d'usage type du véhicule peut être différent d'une journée à l'autre et d'une semaine à l'autre. Ce profil doit à minima répartir pour chaque journée les phases de parking et les phases de roulage. Un profil type simple est donné par un nombre de kilomètres parcourus durant l'intervalle de temps d'utilisation, et un trajet tel que trajet domicile-travail.

Le paramètre de consommation électrique 13 de l'architecture électronique de charge solaire est relatif à la consommation des composants relatifs à l'utilisation de l'énergie solaire provenant du module photovoltaïque 7 pour charger les accumulateurs 2, 4. Cette consommation électrique est la consommation supplémentaire qui résulte de cette charge solaire, sur l'intervalle de temps d'utilisation concerné.

La consommation de l'architecture électronique de charge solaire est fonction du rendement de chaque composant participant à la charge solaire. Typiquement, l'architecture électronique de charge solaire comporte un régulateur de charge solaire (par exemple de type MPPT, « Maximum Power Point Tracking »), et un convertisseur DC/DC. L'architecture électronique de charge solaire comporte de plus le système de gestion de batterie 3, qui est également utilisé lors de la charge solaire lorsque l'accumulateur de traction 2 est en jeu. La consommation de l'architecture électronique de charge solaire inclut donc également la consommation du système de gestion de batterie 3 lorsque ce dernier est mis sous tension pour gérer la charge solaire.

La consommation de l'architecture électronique de charge solaire peut être potentiellement différente entre les phases de stationnement et les phases de roulage du véhicule. Cette valeur de consommation peut être déterminée par exemple à partir des caractéristiques de consommation des composants en jeu, ou par mesure.

Le modèle numérique 8 est par ailleurs élaboré autour d'une stratégie de charge photovoltaïque 14, spécifique de cette application de véhicule à moyens de charge multisources et à batteries hétérogènes, et qui est schématisée sur la figure 2 par un sous-ensemble au sein du modèle numérique 8. La stratégie de charge photovoltaïque 14 est un ensemble d'étapes relatives aux opérations de charge des accumulateurs 2, 4 par l'énergie solaire captée par le module photovoltaïque 7, en complément du moyen de charge principal. La stratégie de charge photovoltaïque 14, faisant partie du modèle numérique 8, est donc le reflet de la stratégie de charge effective qui sera programmée dans le module électronique de charge 5 du véhicule, et qui fixe la manière dont les accumulateurs électriques 2, 4 sont chargés par le module photovoltaïque 7 en tant que moyen de charge complémentaire.

La stratégie de charge photovoltaïque 14 incluse dans le modèle numérique 8 comporte au moins les étapes suivantes :
- si la puissance fournie par le module photovoltaïque 7 est supérieure à une valeur seuil prédéterminée, l'accumulateur électrique de traction 2 est directement chargé par le module photovoltaïque ; et
- si la puissance fournie par le module photovoltaïque 7 est inférieure à une valeur seuil prédéterminée, le module photovoltaïque charge uniquement l'accumulateur électrique de service 4. L'accumulateur électrique de traction 2 est quant à lui périodiquement chargé par déversement itératif de l'accumulateur électrique de service 4.

Cette stratégie de charge photovoltaïque incluse dans le modèle numérique 8 assure une synergie entre l'optimisation du procédé de conception et la stratégie de charge effective une fois implémentée dans le module photovoltaïque 7.

De préférence, la valeur seuil prédéterminée en deçà de laquelle le module photovoltaïque 7 charge uniquement l'accumulateur électrique de service 4 est une valeur de puissance correspondant à une intensité acceptable pour l'accumulateur électrique de service 4. Dans le cas d'un accumulateur de service 4 constitué d'une batterie au plomb, une valeur optimale d'intensité de charge se situe autour de la valeur correspondant au coefficient C10 (courant permettant une décharge complète de la batterie en 10 heures). Un courant au-delà de C10 reste acceptable mais ne doit pas de préférence dépasser le courant correspondant au coefficient C5 (courant permettant une décharge complète de la batterie en 5 heures).

La valeur seuil prédéterminée au-delà de laquelle le module photovoltaïque 7 charge directement l'accumulateur de traction 2 peut être égale ou différente de la valeur seuil précédente. Dans cet exemple, les deux valeurs seuil sont égales et correspondant à l'intensité C5.

Par exemple, pour un accumulateur de service 4 qui est constitué par une batterie au plomb de 100 Ah, les deux valeurs seuil prédéterminées de C5 correspondent à un courant de charge de 20 A.

Ainsi, dans cet exemple avec une batterie au plomb comme accumulateur de service 4 :
- si la puissance fournie par le module photovoltaïque 7 est supérieure à une puissance correspondant à l'intensité C5 de cette batterie au plomb, l'accumulateur électrique de traction 2 est directement chargé par le module photovoltaïque 7 ; et
- si la puissance fournie par le module photovoltaïque 7 est inférieure à une puissance correspondant à l'intensité C5 de cette batterie au plomb, le module photovoltaïque 7 charge uniquement l'accumulateur électrique de service 4, et l'accumulateur électrique de traction 2 est périodiquement chargé par déversement itératif de l'accumulateur électrique de service 4.

Lorsque la puissance fournie par le module photovoltaïque 7 est inférieure à la valeur seuil prédéterminée évoquée, l'intensité de charge fournie par le module photovoltaïque 7 est acceptable pour l'accumulateur de service 4 et la charge vise ainsi uniquement l'accumulateur de service 4. Ce dernier ne disposant pas de système de gestion de batterie, ou autre électronique consommant de l'énergie, cette charge est optimisée et présente une meilleure efficience, car l'électronique de charge relative à la batterie de traction est mise sous tension seulement de manière intermittente (à l'occasion des phases de déversement itératif). Ce n'est que lorsque l'intensité de charge est au-delà de la valeur seuil, et n'est plus applicable à la charge de l'accumulateur de service 4, que l'accumulateur de traction 2 est chargé directement, avec la mise sous tension concomitante de son électronique permettant la charge, et notamment son système de gestion de batterie.

Durant la phase de charge par l'accumulateur de service 4, ce dernier charge à son tour l'accumulateur de traction 2 par déversement itératif. Autrement dit, lorsque l'accumulateur de service 4 atteint un état de charge supérieur à un seuil haut (par exemple 80 % d'état de charge), ou lorsqu'il est complètement chargé, l'accumulateur de service 4 charge à son tour l'accumulateur de traction 2, jusqu'à ce que l'état de charge de l'accumulateur de service 4 descende jusqu'à un niveau d'état de charge égal à un seuil bas (par exemple 50 % d'état de charge). L'électronique nécessaire à la charge de l'accumulateur de traction 2 n'est alors mise sous tension que pendant cette phase de déversement, c'est-à-dire de charge intermittente de l'accumulateur de traction 2 par l'accumulateur de service 4. Après cette phase de déversement, la charge de l'accumulateur de service 4 par le module photovoltaïque 7 reprend, et l'électronique de charge de l'accumulateur de traction 2 est remise hors tension. L'accumulateur de traction 2 est ainsi chargé de manière cyclique, par déversement itératif de l'accumulateur de service 4 vers l'accumulateur de traction 2, l'état de charge de l'accumulateur de service 4 oscillant entre des seuils hauts et bas.

Lorsque la puissance fournie par le module photovoltaïque 7 est supérieure à la valeur seuil prédéterminée évoquée, le courant de charge est considéré comme trop élevé pour charger l'accumulateur de service 4 sans dommages, et l'accumulateur de traction 2 est ainsi directement rechargé par le module photovoltaïque 7. Ceci nécessite une mise sous tension d'éléments de l'architecture de charge relatifs à l'accumulateur de traction 2, notamment le système de gestion de batterie, et la consommation non négligeable correspondante.

Les éléments de l'architecture de charge relatifs à l'accumulateur de traction 2 ne seront donc mis sous tension en continu que dans le cas d'un courant de charge trop élevé pour charger l'accumulateur de service 4 sans dommages.

Cette stratégie de charge photovoltaïque 14 optimisée pour le présent procédé de conception fait partie du modèle numérique 8, et c'est donc selon cette stratégie que les données d'entrée seront traitées pour donner la distance autogénérée par énergie solaire 15, qui va caractériser le véhicule en plus de la distance qu'il va parcourir sous l'effet de sa charge principale.

Le modèle numérique 8 et sa stratégie de charge photovoltaïque 14 sont ainsi optimisés pour que le procédé de conception prenne en compte, au niveau du moyen de charge solaire complémentaire, une architecture électronique de charge qui est mise sous tension de manière optimale, de sorte à équilibrer l'énergie reçue par le module photovoltaïque 7 et la consommation électrique des composants nécessaires à la gestion de la charge.

La stratégie de charge photovoltaïque 14 peut par ailleurs être complétée par toute étape ou mesure supplémentaire, au-delà des règles données précédemment. Par exemple, la stratégie de charge photovoltaïque peut comporter des étapes optionnelles telles que des phases de maintien de charge de l'accumulateur de service 4 même après que son état de charge ait atteint 100 % (cette « surcharge » permettant d'homogénéiser l'électrolyte d'une batterie au plomb), ou encore des étapes de charge de l'accumulateur de service 4 par l'accumulateur de traction 2 lorsque l'accumulateur de service 4 présente un état de charge en deçà d'une valeur limite.

Il est également possible de prévoir des étapes de fin de charge (par exemple entre l'état de charge 95 % et l'état de charge 100 %) de l'accumulateur de traction 2 grâce au module photovoltaïque 7 même lorsque le véhicule est chargé sur le réseau électrique.

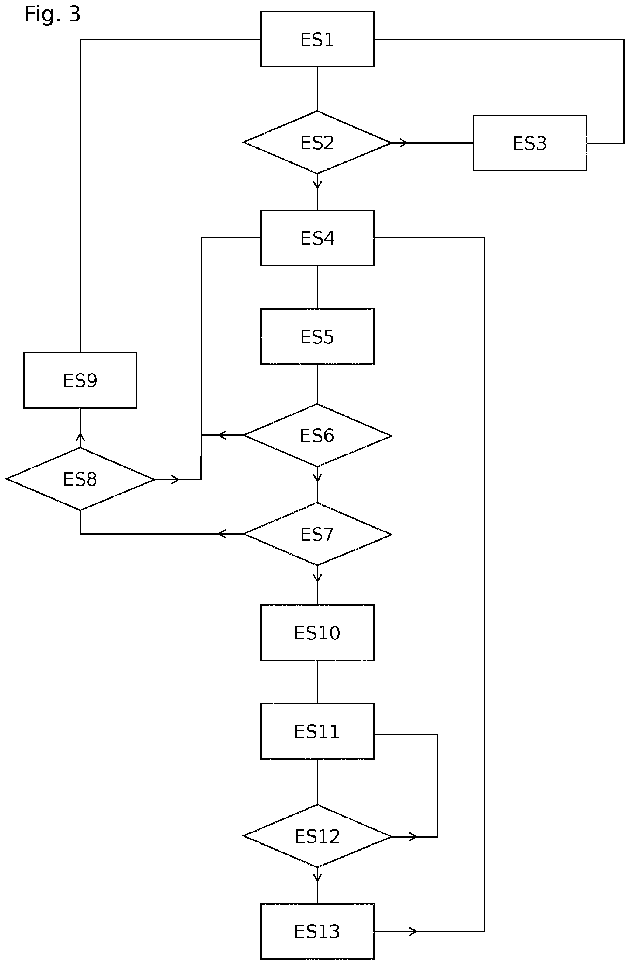

La figure 3 illustre un exemple de stratégie de charge photovoltaïque 14 pouvant être intégrée au modèle numérique 8. Dans cet exemple, les étapes de charge de l'accumulateur de traction 2 par déversement itératif de l'accumulateur de service 4 ont lieu seulement durant la phase de stationnement du véhicule qui est schématisée sur cette figure 3. Durant les phases de roulage, la charge des accumulateurs est réalisée de manière classique.

La figure 3 est un diagramme illustrant la stratégie de charge photovoltaïque lorsque le véhicule est en phase de stationnement, avec la charge par déversement itératif. La première étape ES1 correspond à l'état stationné du véhicule.

La deuxième étape ES2 est une vérification du courant de charge fourni par le module photovoltaïque 7, en sortie de son régulateur solaire, en tant que valeur représentative de la puissance fournie par le module photovoltaïque 7. Si le courant de charge est supérieur à une valeur prédéterminée (dans cet exemple illustratif : 20 A correspondant au coefficient C5 pour une batterie au plomb de 100 Ah), la stratégie de charge passe à l'étape ES3 dans laquelle l'accumulateur de traction 2 est directement chargé par le module photovoltaïque 7.

Si le courant de charge est inférieur à la valeur prédéterminée, la stratégie de charge passe à l'étape ES4 dans laquelle l'accumulateur de service 4 (constitué d'une batterie au plomb) est chargé par ce courant de charge.

L'étape suivante ES5 est une détermination de l'état de charge de l'accumulateur de service 4. L'étape suivante ES6 est une vérification de cet état de charge de l'accumulateur de service 4 : si cet état de charge est inférieur à un seuil haut prédéterminé (par exemple proche de 100 %), la stratégie de charge reboucle sur l'étape ES4, et si cet état de charge est supérieur à ce seuil haut, on passe à l'étape ES7 qui vérifie si l'accumulateur de traction 2 est chargé.

Si l'accumulateur de traction 2 est chargé, la stratégie passe à l'étape ES8 de détermination de la charge de l'accumulateur de service 4. La condition « chargé » de l'accumulateur de traction 2 peut être paramétrée à toute valeur adaptée, par exemple 100 % pour garantir une charge maximale de l'accumulateur de traction 2, ou encore 80 % pour privilégier la durée de vie calendaire de l'accumulateur de traction 2.

Si l'accumulateur de service 4 est chargé, la stratégie passe à l'étape ES9 d'arrêt du système et reboucle sur l'étape ES1.

Si l'accumulateur de traction 2 est déterminé comme non chargé à l'étape ES7, la stratégie passe à l'étape ES10 dans laquelle l'électronique de charge de l'accumulateur de traction 2 est mise sous tension, avec la consommation électrique correspondante.

Les étapes suivantes concernent la charge de l'accumulateur de traction 2 par l'accumulateur de service 4 :
- L'étape ES11 est une étape de chargement de l'accumulateur de traction 2 par l'accumulateur de service 4 ;
- l'étape ES12 est une étape de détermination de l'état de charge de l'accumulateur de service 4. Tant que l'accumulateur de service 4 reste à un état de charge supérieur à un seuil bas d'état de charge prédéterminé (par exemple 50 %), la stratégie reboucle sur l'étape ES11. Lorsque l'état de charge de l'accumulateur de service 4 passe sous ce seuil bas, la stratégie passe à l'étape ES13 dans laquelle la charge par déversement est stoppée, et dans laquelle l'électronique nécessaire à la charge de l'accumulateur de traction 2 (notamment le système de gestion de batterie) est mise hors tension, réduisant ainsi la consommation électrique de l'ensemble.

La stratégie reboucle ensuite sur l'étape ES4 pour une nouvelle itération.

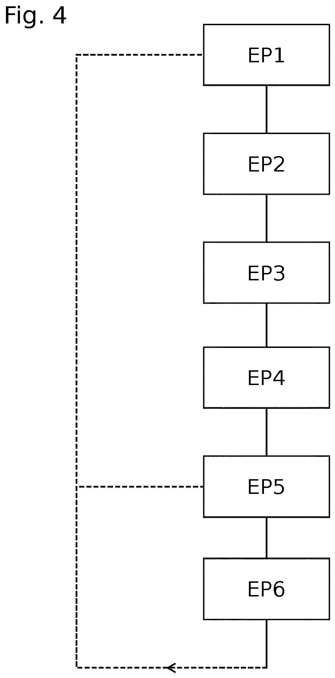

Le procédé de conception d'un véhicule électrique selon l'invention met en oeuvre le modèle numérique du véhicule qui vient d'être décrit. La figure 4 est un diagramme illustrant ce procédé selon un exemple.

Dans une première étape EP1, ce modèle numérique 8 est appliqué pour au moins deux valeurs de référence correspondant à deux puissances crête de modules photovoltaïques différentes, tous les autres paramètres d'entrée 9 à 13 du modèle numérique 8 étant égaux. Autrement dit, le modèle numérique est mis en oeuvre une première fois avec, en entrée, une première valeur de référence de puissance crête de module photovoltaïque 7, et une deuxième fois avec, en entrée, une deuxième valeur de référence de puissance crête de module photovoltaïque 7. Pour ce qui est des autres paramètres d'entrée, ces deux mises en oeuvre sont réalisées, sur le même intervalle de temps d'utilisation, avec les mêmes valeurs de :
- série temporelle d'irradiance 10 ;
- valeur de pertes par ombrage 11 ;
- consommation kilométrique 12 de la motorisation électrique du véhicule (dans le cadre de sa fonction de traction électrique) ;
- consommation électrique 13 de l'architecture de charge solaire du véhicule électrique.

De même, tous les autres paramètres optionnels supplémentaires en entrée du modèle numérique 8, dans une application particulière, seront les mêmes pour les deux mises en oeuvre du modèle numérique 8.

Ces deux mises en oeuvre du modèle numérique 8 pour deux valeurs de référence du module photovoltaïque 7, tous les autres paramètres d'entrée étant par ailleurs inchangés, produisent deux valeurs correspondantes de distance autogénérée par énergie solaire, pour cet intervalle de temps d'utilisation.

Dans un exemple de réalisation, la première valeur de référence de puissance crête pour le module photovoltaïque 7 est de 50 W (ce qui peut correspondre à une fourchette basse pour un module photovoltaïque adaptable à un véhicule), et la deuxième valeur de référence est de 500 W (ce qui peut correspondre à une fourchette haute pour un module photovoltaïque adaptable à un véhicule).

Les autres paramètres d'entrée, qui sont donc les mêmes pour les deux mises en oeuvre du modèle numérique 8, sont par exemple les suivantes :
- série temporelle d'irradiance 10 : une série temporelle d'une ville donnée, par pas de 15 minutes ;
- pertes par ombrage 11 : 30 % ;
- consommation kilométrique 12 de la traction électrique du véhicule : 157 Wh/km ;
- consommation électrique 13 de l'architecture électronique de charge solaire : 12 W.

Ces paramètres d'entrée du modèle numérique sont suffisants pour obtenir des valeurs de distance autogénérée par énergie solaire 15. D'autres paramètres optionnels peuvent permettre d'affiner le modèle. Des paramètres d'entrée optionnels pour le modèle numérique 8 peuvent être par exemple :
- la capacité de l'accumulateur de traction 2 du véhicule : 50 kWh ;
- des pertes par ombrage 11 différenciées en fonction des plages d'utilisation (arrêt ou roulage) ;
- des consommations électriques 13 de l'architecture électronique de charge solaire différenciées en fonction des plages d'utilisation (arrêt, ou roulage et charge sur le réseau) ;
- consommation lors de la mise sous tension de l'architecture de charge solaire : 8 W;
- rendement convertisseur DC/DC entre le module photovoltaïque 7 et l'accumulateur de service 4 : 99,1 % ;
- rendement convertisseur DC/DC entre l'accumulateur de service 4 et l'accumulateur de traction 2: 97,7 % ;
- rendement contrôleur de charge solaire MPPT : 99 % ;
- rendement accumulateur de service 4 : 92 % ;
- rendement de l'onduleur permettant d'alimenter la motorisation électrique du véhicule à partir de l'accumulateur de traction 2 : 98,7 % ;
- rendement de l'accumulateur de traction 2 : 97 % ;
- nombre de kilomètres prévus pour être parcourus sur l'intervalle de temps d'utilisation (correspondant à un scénario d'utilisation) : 12 200 Km ;
- plage horaire de charge sur le réseau électrique : entre 18 h et 00 h ;
- nombre de kilomètres prévus pour être parcourus par jour (correspondant à un scénario d'utilisation) : 51 km ;
- durée de roulage quotidienne : 2 heures à 25 km/h ;
- durée d'arrêt : 480 min ;
- nombre d'arrêts quotidiens : 1.

Pour chacune de ces deux valeurs de référence de puissance crête de module photovoltaïque, le modèle numérique 8 fournit donc deux valeurs correspondantes de distance autogénérée par énergie solaire.

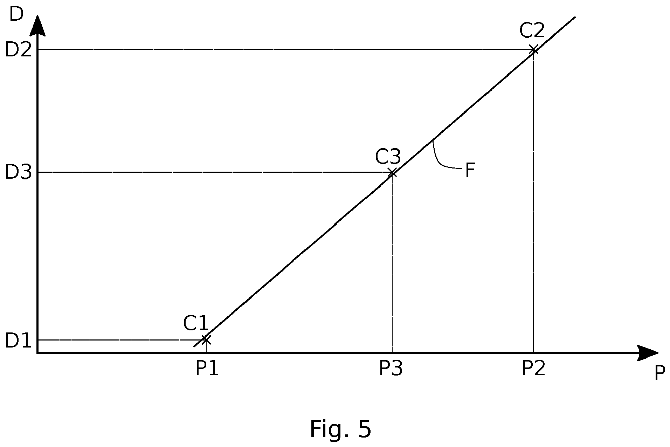

Ces valeurs de référence de puissance crête et les valeurs correspondantes de distance autogénérée par énergie solaire sont illustrées à la figure 5, qui est un graphique représentant la distance autogénérée par énergie solaire D en fonction de la puissance crête P.

En référence à la figure 5, l'étape EP1 aboutit à la mise en correspondance d'une première valeur P1 de référence de puissance crête 9 de module photovoltaïque avec sa distance autogénérée par énergie solaire correspondante D1, et à une deuxième valeur P2 de référence de puissance crête 9 de module photovoltaïque avec sa distance autogénérée par énergie solaire correspondante D2.

L'étape suivante du procédé de conception (étape EP2 sur le diagramme de la figure 4) consiste à déterminer deux points de calibrage C1, C2 (représentés figure 5), chaque point de calibrage associant l'une desdites valeurs de référence (P1, P2) avec sa distance autogénérée par énergie solaire (D1, D2). À titre d'exemple didactique, ces deux points de calibrage peuvent être illustrés géométriquement comme sur la figure 5. Sur le graphique de la figure 5, la puissance crête 9 donnée en entrée du modèle numérique 8 est en abscisse et la distance autogénérée par énergie solaire renvoyée en sortie par le modèle numérique 8 est en ordonnée. Chaque point de calibrage C1, C2 a pour coordonnées respectivement (P1, D1) et (P2, D2).

L'étape suivante EP3 du procédé consiste à déterminer une fonction représentative de la distance autogénérée par énergie solaire (sur l'intervalle de temps d'utilisation) en fonction de la puissance crête du module photovoltaïque 7, cette fonction passant sensiblement par les deux points de calibrage. De préférence, la fonction choisie est une fonction linéaire (représentée sous forme d'une droite F sur la figure 5). Cette fonction linéaire est celle qui passe sensiblement par les deux points de calibrage C1, C2 (droite F passant sensiblement par les deux points C1, C2).

Selon un mode de réalisation (également illustré figure 5), le procédé comprend le fait de déterminer un troisième point de calibrage C3 optionnel. Ainsi, le modèle numérique 8 est appliqué pour une troisième valeur P3 de référence de puissance crête 9 de module photovoltaïque, tous les autres paramètres d'entrée du modèle étant identiques aux paramètres correspondant pour P1 et P2. Une telle troisième valeur de référence est par exemple située entre les deux valeurs P1, P2. Le modèle numérique 8 fournit ainsi en sortie une valeur de distance autogénérée par énergie solaire D3. Le point de calibrage C3, de coordonnées (P3, D3) est ainsi situé entre les points de calibrage C1 et C2. Le point de calibrage C3 permet ainsi de vérifier si la fonction reliant C1 et C2 est une fonction linéaire, le point C3 étant alors sensiblement aligné avec les points C1 et C2. Ladite fonction représentative passe alors sensiblement par C1, C2 et C3. En pratique, les points C1, C2 et C3 ne seront jamais strictement alignés, mais peuvent être suffisamment alignés pour considérer qu'ils sont sensiblement alignés et que la condition de fonction linéaire représentative est remplie. La fonction linéaire représentative peut alors être déterminée par tout outil mathématique adapté, par exemple une régression linéaire déterminant la droite de régression correspondant aux trois points de calibrage C1, C2, C3. Dans le cadre de l'invention, avec la mise en oeuvre du modèle numérique 8 décrit, il apparait de manière inattendue et opportune que la mise en oeuvre de la stratégie de charge implémentée dans le modèle numérique 8 (et décrite précédemment) abouti à des points de calibrage qui peuvent être reliés par une fonction suffisamment régulière pour être approchée par une fonction simple, et notamment ici une fonction linéaire.

Une fonction représentative de la distance autogénérée par énergie solaire (sur l'intervalle de temps d'utilisation) en fonction de la puissance crête du module photovoltaïque est ainsi obtenue, et ce indépendamment de l'énergie provenant du moyen de charge principal sur ce même temps d'utilisation.

La troisième valeur de référence de puissance crête pour le module photovoltaïque 7 est ici par exemple de 300 W.

Optionnellement, dans le cas d'une détermination d'un ou plusieurs points de calibrage supplémentaires tels que C3, le procédé peut comporter une étape conditionnelle au cas où les points de calibrage sont manifestement non alignés. Dans cette étape, le procédé de conception peut être interrompu sur la base d'une alerte pour vérification des paramètres et nouvelles mises en oeuvre du modèle numérique 8. En variante, lors d'une telle étape, une fonction représentative peut être déterminée par une fonction non linéaire obtenue par ajustement de courbe sur les différents points de calibrage (il est alors avantageux que les points de calibrage soient nombreux). Ainsi, le calcul d'au moins un point de calibrage supplémentaire C3 est à privilégier, car il permet de vérifier si la fonction est de nature linéaire, ou si une relation non-linéaire est à utiliser pour lier les puissances crêtes et les distances autogénérées par énergie solaire.

Suite à l'obtention d'une fonction représentative de la distance autogénérée par énergie solaire (sur l'intervalle de temps d'utilisation) en fonction de la puissance crête du module photovoltaïque, l'étape suivante EP4 du procédé consiste à déterminer une fonction inverse de ladite fonction, cette fonction inverse étant donc représentative de la puissance crête du module photovoltaïque en fonction de la distance autogénérée par énergie solaire.

L'inversion de la fonction illustrée par la droite de la figure 5 conduit donc à cette fonction inverse. Plus la fonction initiale est simple, ce qui est le cas ici grâce à la mise en oeuvre du modèle numérique 8 décrit, plus le calcul de la fonction inverse est simple, ce qui nécessite donc moins de capacité de calcul et limite les moyens de mise en oeuvre du procédé de conception, et limite donc les coûts.

L'étape suivante du procédé consiste à déterminer avec cette fonction inverse (qui est donc représentative de la puissance crête du module photovoltaïque en fonction de la distance autogénérée par énergie solaire) une puissance crête du module photovoltaïque correspondant à une valeur choisie de distance autogénérée par énergie solaire.

Cette valeur choisie de distance autogénérée par énergie solaire peut être par exemple une distance qui correspond à un seuil minimal au-delà duquel la mise en place d'un module photovoltaïque et de son électronique spécifique est rentable selon un critère, par exemple financier ou du point de vue du bilan énergétique. Ladite valeur choisie de distance autogénérée par énergie solaire correspond alors à une distance minimale prédéterminée pour le véhicule, sur l'intervalle de temps d'utilisation.

Cette valeur choisie de distance autogénérée par énergie solaire peut également être fixée à une première unité d'une valeur de distance. Par exemple, pour un intervalle de temps d'utilisation d'une année, cette valeur peut être fixée à 1 km. Ainsi, la puissance crête du module photovoltaïque obtenu correspond au module photovoltaïque nécessaire pour que le véhicule soit adapté à générer son premier kilomètre annuel autogénéré, en plus de la distance qui sera due uniquement au moyen de charge principal. Le procédé produit ainsi une consigne du « module minimal », c'est-à-dire un module photovoltaïque constitué d'un panneau solaire dont la puissance crête est juste égale à la puissance crête obtenue (relative à ce premier kilomètre généré par le solaire), et en deçà de laquelle l'installation photovoltaïque n'a alors pas de raison d'être car il ne remplira alors pas sa fonction de moyen de charge complémentaire venant assister la charge principale. Dans le cadre du procédé de conception de véhicule, il est alors possible de repenser le véhicule, les zones géographiques où une option de module photovoltaïque sera proposée, etc, au vu de ce module minimal.

Le procédé passe ensuite à l'étape EP6 de choix et de dimensionnement de l'installation solaire et du véhicule, en fonction de la valeur de puissance crête déterminée à l'étape EP5.

Dans le cadre de la conception d'un véhicule, le procédé comportera avantageusement une itération de plusieurs étapes, et notamment d'au moins deux étapes. Par exemple, lorsque la puissance crête de module photovoltaïque, obtenue suite au choix d'une valeur choisie de distance autogénérée par énergie solaire, est au-delà d'une certaine valeur, des étapes du procédé peut être réitéré avec, par exemple :
- de nouvelles configurations dans la stratégie de charge photovoltaïque qui est intégrée au modèle numérique 8 ;
- de nouveaux paramètres de série temporelle d'irradiance 10 (correspondant à un changement de la zone géographique où le véhicule est proposé) ;
- de nouvelles valeurs du paramètre de perte par ombrage 11 (correspondant au fait que, par exemple, les préconisations d'utilisation du véhicule exigeront une certaine exposition au soleil) ;
- de nouvelles valeurs du paramètre de consommation kilométrique 12 de la motorisation électrique du véhicule (qui, par exemple, conduiront à revoir la motorisation électrique prévue pour le véhicule) ;
- de nouvelles valeurs du paramètre de consommation électrique 13 de l'architecture de charge solaire (qui, par exemple, conduiront à revoir les composants électroniques prévus pour constituer cette architecture).

Cette itération est illustrée sur la figure 4 par les pointillés de rebouclage de l'étape EP6, par exemple sur l'étape EP5 ou sur l'étape EP1. La conception du véhicule, pour ce qui est des aspects solaires, peut ainsi être revue de manière itérative suite à d'autres choix de valeur de référence pour la puissance crête, pour éventuellement d'autres configurations de paramètres d'entrée du modèle numérique 8, voire des modifications du modèle numérique 8 (qui impliquent des modifications dans l'architecture du futur véhicule).

À partir de la puissance crête du module photovoltaïque obtenue à l'étape EP5, par une ou plusieurs itérations des étapes du procédé, le dimensionnement et le choix du module photovoltaïque 7 peut avoir lieu à l'étape EP6, de même que son architecture, sa disposition sur le véhicule, le dimensionnement des éléments porteurs du module photovoltaïque 7 sur le véhicule, c'est-à-dire des différentes parties du véhicule en interaction avec le module photovoltaïque 7.

Il se peut par exemple que la puissance crête du module photovoltaïque obtenue conduise à un choix d'architecture en plusieurs parties du module photovoltaïque, sur différentes surfaces disponibles du véhicule (toit, capot, portes, etc.). Au contraire, la puissance crête du module photovoltaïque obtenue peut conduire à prévoir un module photovoltaïque 7 de surface inférieure à la surface disponible sur une portion du véhicule, le procédé conduisant ainsi à une réduction du coût et de l'empreinte carbone du module photovoltaïque 7.

Notamment, dans l'étape EP6, la puissance crête du module photovoltaïque obtenue est convertie en une superficie d'un ou plusieurs panneaux solaires, par le choix d'une technologie de panneau solaire et du rendement correspondant. La puissance crête du module photovoltaïque obtenue à l'étape EP5 peut par exemple conduire à la conclusion que la surface disponible pour un panneau solaire d'une telle puissance crête est restreinte, et qu'il est alors avantageux de se tourner vers une technologie de panneau solaire à haut rendement, même plus chère, pour atteindre cette valeur de puissance crête sur une surface restreinte. À l'inverse, la teneur de ces conclusions peut être qu'il est rentable d'employer un panneau solaire de moindre rendement et de faible coût.

De même, l'étape EP6 peut conduire au choix d'un module photovoltaïque 7 distribué en sous-modules photovoltaïques (différents sous-ensembles de panneaux solaires, par exemple) associés à différentes surfaces porteuses du véhicule, telles que toit, capot, portes, etc., avec le dimensionnement associé de ces différentes surfaces porteuses.

De même, l'étape EP6 peut notamment conduire au choix d'une technologie pour le module photovoltaïque 7. Dans ce cadre, cette étape est mise en oeuvre pour au moins deux technologies de module photovoltaïque différentes, avec des coûts et des rendements propres à chaque technologie. Cette étape de dimensionnement du véhicule et du module photovoltaïque comporte alors des opérations dans lesquelles on détermine, pour chaque technologie de module photovoltaïque (avec son rendement propre), la surface de module photovoltaïque nécessaire pour atteindre la puissance crête résultante. On compare ensuite les différentes surfaces de module photovoltaïque obtenues, et on procède au choix de la technologie de module photovoltaïque en fonction de la faisabilité de l'implémentation de cette surface sur le véhicule. Le véhicule lui-même peut également être dimensionné compte tenu de ce choix de technologie de module photovoltaïque et de sa surface correspondante.

Dans la conception du véhicule réel, ce dernier est équipé d'un module de charge 5 qui est programmé selon les mêmes stratégies de charge que celles utilisées dans le modèle numérique 8.

Des variantes de réalisation peuvent être envisagées. Notamment, la présente description est centrée sur les étapes principales de l'invention, permettant une conception du véhicule, dans ses aspects touchant à l'implémentation d'un module photovoltaïque comme moyen de charge complémentaire, précisément dans le cadre d'un véhicule à moyens de charge multisources. L'invention peut cependant être mise en oeuvre avec toute autre étape secondaire jugée opportune ou toute autre complément à la stratégie de charge, par exemple.

## Revendications

1. Procédé de conception d'un véhicule électrique à moyens de charge multisources dont un moyen de charge principal et un moyen de charge solaire complémentaire, ce véhicule comportant :
- un accumulateur électrique de traction (2) qui est associé à un système de gestion de batterie (3) et qui alimente une motorisation électrique du véhicule ;
- un accumulateur électrique de service (4) qui alimente un réseau électrique de service du véhicule ;
- un moyen de charge principal ;
- un moyen de charge complémentaire comportant un module photovoltaïque (7) adapté à charger l'accumulateur électrique de traction (2) et l'accumulateur électrique de service (4) par l'intermédiaire d'une architecture électronique de charge solaire ;
ce procédé étant **caractérisé en ce qu'**il comporte les étapes suivantes :
- déterminer un modèle numérique (8) du véhicule, produisant en sortie la distance autogénérée par énergie solaire (15) sur un intervalle de temps d'utilisation indépendamment de la distance générée par le moyen de charge principal, pour des paramètres en entrée qui comprennent une puissance crête du module photovoltaïque (9), une série temporelle d'irradiance (10) sur l'intervalle de temps d'utilisation, une consommation kilométrique (12) de la motorisation électrique du véhicule sur l'intervalle de temps d'utilisation, une consommation électrique (13) de ladite architecture électronique de charge sur l'intervalle de temps d'utilisation, ce modèle numérique (8) du véhicule intégrant une stratégie de charge desdits accumulateurs électriques (2,4) qui remplit les conditions suivantes : si la puissance fournie par le module photovoltaïque (7) est supérieure à une valeur seuil prédéterminée, l'accumulateur électrique de traction (2) est directement chargé par le module photovoltaïque (7) ; et si la puissance fournie par le module photovoltaïque (7) est inférieure à une valeur seuil prédéterminée, le module photovoltaïque (7) charge uniquement l'accumulateur électrique de service (4), et l'accumulateur électrique de traction (2) est périodiquement chargé par déversement itératif de l'accumulateur électrique de service (4) ;
- appliquer ledit modèle numérique (8) pour deux valeurs de référence (P1,P2) correspondant à deux puissances crête de module photovoltaïque différentes, tous les autres paramètres d'entrée du modèle numérique (8) étant égaux, et obtenir les deux valeurs correspondantes de distance autogénérée par énergie solaire (D1,D2) ;
- déterminer deux points de calibrage (C1,C2), chaque point de calibrage associant l'une desdites valeurs de référence (P1,P2) et sa distance autogénérée par énergie solaire correspondante (D1,D2) ;
- déterminer une fonction (F) représentative de la distance autogénérée par énergie solaire en fonction de la puissance crête du module photovoltaïque, passant sensiblement par les deux points de calibrage (C1,C2) ;
- déterminer une fonction inverse de ladite fonction (F), cette fonction inverse étant représentative de la puissance crête du module photovoltaïque en fonction de la distance autogénérée par énergie solaire ;
- déterminer, avec ladite fonction inverse, une puissance crête résultante pour le module photovoltaïque, cette puissance crête résultante correspondant à une valeur choisie de distance autogénérée par énergie solaire ;
- dimensionner le véhicule et le module photovoltaïque (7) en fonction de ladite puissance crête résultante.

2. Procédé selon la revendication 1, **caractérisé en ce que** :
- l'étape d'appliquer ledit modèle numérique (8) pour deux valeurs de référence (P1,P2) comporte une opération supplémentaire d'appliquer ledit modèle numérique (8) pour une troisième valeur de référence (P3) correspondant à une troisième puissance crête de module photovoltaïque différente, tous les autres paramètres d'entrée du modèle numérique étant égaux, et obtenir une troisième valeur correspondante (D3) de distance autogénérée par énergie solaire ;
- l'étape de déterminer deux points de calibrage (C1,C2) comporte une opération supplémentaire de déterminer un troisième point de calibrage (C3) associant la troisième valeur de référence (P3) et sa distance autogénérée par énergie solaire correspondante (D3) ;
- l'étape de déterminer une fonction (F) représentative de la distance autogénérée par énergie solaire en fonction de la puissance crête du module photovoltaïque, est réalisée en déterminant une fonction passant sensiblement par les trois points de calibrage (C1,C2,C3).

3. Procédé selon la revendication 2, **caractérisé en ce que** ladite fonction (F) représentative de la distance autogénérée par énergie solaire en fonction de la puissance crête du module photovoltaïque, est déterminée comme :
- une fonction linéaire passant sensiblement par les trois points de calibrage (C1,C2,C3), si les trois points de calibrage (C1,C2,C3) sont sensiblement alignés ;
- une fonction non linéaire passant sensiblement par les trois points de calibrage (C1,C2,C3), si les trois points de calibrage (C1,C2,C3) sont non alignés.

4. Procédé selon l'une des revendications 2 ou 3, **caractérisé en ce que** ladite fonction (F) représentative de la distance autogénérée par énergie solaire en fonction de la puissance crête du module photovoltaïque, est déterminée comme une fonction linéaire suivant une régression linéaire sur les trois points de calibrage (C1,C2,C3).

5. Procédé selon l'une des revendications précédentes, **caractérisé en ce qu'**au moins deux de ses étapes sont réalisées en itération pour différentes valeurs de la série temporelle d'irradiance (10) sur l'intervalle de temps d'utilisation.

6. Procédé selon l'une des revendications précédentes, **caractérisé en ce que** au moins deux étapes sont réalisées en itération pour différentes valeurs de ladite consommation kilométrique (12) de la motorisation électrique du véhicule.

7. Procédé selon l'une des revendications précédentes, **caractérisé en ce que** au moins deux étapes sont réalisées en itération pour différentes valeurs de consommation électrique (13) de ladite architecture électronique de charge sur l'intervalle de temps d'utilisation.

8. Procédé selon l'une des revendications précédentes, **caractérisé en ce que** ladite valeur choisie de distance autogénérée par énergie solaire est égale à une première unité d'une valeur de distance.

9. Procédé selon l'une des revendications 1 à 7, **caractérisé en ce que** ladite valeur choisie de distance autogénérée par énergie solaire correspond à une distance minimale prédéterminée pour le véhicule sur l'intervalle de temps d'utilisation.

10. Procédé selon l'une des revendications précédentes, **caractérisé en ce que** l'étape de dimensionner le véhicule et le module photovoltaïque (7) comporte le choix d'une technologie de module photovoltaïque présentant un rendement, et la détermination de la surface du module photovoltaïque correspondant à la puissance crête résultante, compte-tenu de ce rendement.

11. Procédé selon la revendication 10, **caractérisé en ce que** l'étape de dimensionner le véhicule et le module photovoltaïque comporte : pour au moins deux technologies de module photovoltaïque différentes, la détermination de la surface de module photovoltaïque correspondant à la puissance crête résultante, compte-tenu du rendement de chaque technologie de module photovoltaïque ; et comporte de plus la sélection d'une de ces technologies de module photovoltaïque en fonction de ces surfaces déterminées.

12. Procédé selon l'une des revendications précédentes, **caractérisé en ce que** l'étape de dimensionner le véhicule et le module photovoltaïque (7) comporte le dimensionnement des éléments porteurs du module photovoltaïque sur le véhicule.

13. Procédé selon l'une des revendications précédentes, **caractérisé en ce que** l'étape de dimensionner le véhicule et le module photovoltaïque (7) comporte le choix d'un module photovoltaïque distribué en sous-modules photovoltaïques associés à différentes surfaces porteuses du véhicule.

14. Procédé selon l'une des revendications précédentes, **caractérisé en ce que** l'accumulateur électrique de traction (2) est une batterie de tension supérieure à 100 V.

15. Procédé selon l'une des revendications précédentes, **caractérisé en ce que** l'accumulateur de service (4) est une batterie au plomb.

16. Procédé selon l'une des revendications précédentes, **caractérisé en ce que** ladite série temporelle d'irradiance (10) comporte des valeurs d'irradiance par pas de temps, sur l'intervalle de temps d'utilisation, d'une localisation réelle présentant un ensoleillement moyen pour un territoire déterminé.

17. Procédé selon l'une des revendications 1 à 15, **caractérisé en ce que** ladite série temporelle d'irradiance (10) comporte des valeurs d'irradiance par pas de temps, sur l'intervalle de temps d'utilisation, chaque pas de temps correspondant à des moyennes d'irradiance sur un territoire déterminé.

18. Procédé selon l'une des revendications 1 à 15, **caractérisé en ce que** ladite série temporelle d'irradiance (10) comporte des valeurs d'irradiance par pas de temps, sur l'intervalle de temps d'utilisation, pour un lieu réel déterminé.

19. Procédé selon l'une des revendications précédentes, **caractérisé en ce que** ladite valeur seuil prédéterminée est sensiblement égale au coefficient C5 de l'accumulateur électrique de service (4).

20. Procédé selon l'une des revendications précédentes, **caractérisé en ce que**, à l'étape de déterminer un modèle numérique (8) du véhicule, les paramètres en entrée du modèle numérique (8) comportent des pertes par ombrage (11) du module photovoltaïque sur l'intervalle de temps d'utilisation.

21. Procédé selon la revendication 20, **caractérisé en ce qu'**au moins deux de ses étapes sont réalisées en itération pour différentes valeurs de pertes par ombrage (11) du module photovoltaïque sur l'intervalle de temps d'utilisation.
